# EUROPEAN PATENT APPLICATION

(11) **EP 1 584 643 A1**
(43) Date of publication of application: **12.10.2005**
(21) Application number: 04018683.5
(22) Date of filing: 06.08.2004
(51) Int. Cl.: C08J 3/20, C08J 3/22, C09D 7/00

(54) **Method for flatting thermoplastic polymers and paints**

(30) Priority: 30.03.2004 IT MI20040628
(71) Applicant: Supercolori S.p.A., 20014 Nerviano (MI) (IT)
(72) Inventor: Costa, Lorenzo, 20020 Arese (MI) (IT)
(74) Representative: Savi, Alberto

(57) **Abstract**

This invention concerns a method and the product derived from applying this method, for flatting moulded thermoplastic polymers parts and powder paints, of the type that requires particles to be added to said thermoplastic polymers and paints, in which said particles to be added to said thermoplastic polymers and paints are coated with a carrier that has a melting point that is lower than the melting point for said thermoplastic polymers and paints.

The particles have a glass transition temperature that is at least equal to the moulding temperature of said thermoplastic polymers, are made of material able to withstand the polymerisation temperature used for said paints and have a glass transition temperature that is at least equal to the polymerisation temperature used for said paints.

In particular the particles are polyurethane-polyurea micro spheres and the carrier is an organic compound chosen from: polyethylene, polyethylene modified with ethylene vinyl acetate, terpene phenolic resin, dioctyl phthalate, diisobutyl phthalate, diisonyl phthalate, diethyl adipate, dioctyl adipate, ethyl citrate, octyl palmitate, myristyl palmitate, cetyl stearyl palmitate, ethyl hexyl palmitate, purified castor oils, hydrogenated castor oils, olein, stearine, triglycerides, and these carrier may be made up of only one of these organic compounds or a mixture of the same.

## Description

This invention concerns a method and the product derived from applying this method for flatting moulded thermoplastic polymers parts and paints, with this flatting being obtained by means of a mechanism for reflecting/refracting light on the surface achieved by adding particles used to create a specific geometric pattern on the surface of the moulded part.

There are several procedures for flatting both moulded thermoplastic polymers parts and paints in order to obtain a matt surface finish.

Some procedures provide for adding compounds that form chemical bonds with the polymer to be flatted. The technique described in the **EP 0 369 200 (General Electric)** patent is of this type and is used to obtain moulded or thermoformed parts of thermoplastic polymer, including PVC, with a matt surface by using a polyorganosiloxane that forms a graft copolymer with the polyvinyl polymer to be flatted. Flatting is basically obtained by forming chemical bonds (grafting) between the base polymer (PVC) and the additive (polyorganosiloxane).

Another method, of the same type that provides for the formation of chemical bonds, is described in the **US 6 476 128 (General Electric)** patent, according to which it is possible to control the glossiness of the surface of moulded thermoplastic parts (such as PVC and a graft copolymer made up of elastomeric and rigid blocks) by adjusting the cross-linkage density of the chemical bonds between these blocks.

The **US 2003/0150729 (PPG Industries)** patent describes an electrophoresis paint in which the reduction of glossiness is obtained by incorporating solid polymeric additives in a standard composition for electrophoresis paint. The additives mentioned include, among others, particles of aliphatic polyurethane. These additives can also be prepared in paste form. The **CN 1390865 (Shanghai Chlorine Alcali Chemi)** patent describes a resin made up of a main chain made of PVC and that contains tetrahydrofurane gel.

The above mentioned methods involve various drawbacks, due basically to the fact that flatting is obtained by means of a chemical reaction between the thermoplastic polymer and the flatting agent. This fact first of all means that the flatting agent must be able to react chemically with the thermoplastic polymer, and in addition the process must be carried out in such a way as to create optimum conditions for obtaining this chemical reaction. The fact that the flatting agent must be able to react, means in turn that each thermoplastic polymer requires specific flatting agents, thereby drastically reducing the possibility of one specific flatting agent being adapted for treating a wide range of thermoplastic polymers.

In addition, the fact that the original thermoplastic polymer has undergone chemical reactions during its transformation, means that it is different from the original, with the result that its physical characteristics are changed and the possibility of recycling is compromised to a greater or lesser extent.

It is known that by adding small size particles (a few microns in diameter) during extrusion of thermoplastic polymers, moulded or blow moulded parts are obtained with matt surfaces, this flatting having been obtained by means of a mechanism of reflecting/refracting the light produced by the roughness caused by the particles that appear on the surface of the part. However attempt thus far have produced disappointing results, as the particles are not evenly distributed over the surface of the moulded part. More specifically, lumps are formed that will then cause spots on the surface of moulded parts. Similar results are obtained also in the case of flatting paints by adding particles.

This phenomenon is due to the fact that the particles tend to aggregate in such a way that neither subsequent mixing in the extruder, nor the solvent in the paint are able to separate them.

This invention aims to resolve the drawbacks indicated above, proposing a method, and the product derived from this method, according to claims 1 and 13 respectively, and that make it possible to obtain moulded thermoplastic polymer parts by adding coated particles to the thermoplastic polymer or the paint. The procedure involved in this invention makes it possible to obtain parts through injection moulding, blow moulding, or calendering, or painted parts, whose surface is even in terms of appearance and touch as the particles are spread uniformly over the surface.

The method and derived product, covered by this invention, can be accomplished by using these coated particles, whose preparation is the subject of a concurrent patent application lodged by the same applicant.

As far as paints are concerned, the invention essentially refers to powder coatings, however the special preparation of these particles greatly facilitates the dispersion of these particles in liquid paints as well.

This invention will now be described with reference to the figures enclosed in which:
- Figure 1 shows powder granules of the thermoplastic polymer to be moulded or of the paint, coated using a second polymer that encapsulates these particles;
- Figures 2 (a, b, c, d) show how these particles migrate during coalescence of the thermoplastic polymer granules or the melting paint;
- Figures 3 (a, b, c) show how the particles appear on the surface during mould injection;
- Figure 4 shows the path the particles take during the formation of a parison.
- Figure 5 shows how the particles appear on the surface as the paint hardens.

The procedure covered by this invention provides for adding to a thermoplastic polymer in powder form, to be injection moulded, blow moulded, or calendered or to powder coating material, some particles coated with a second thermoplastic polymer, which we will call the "carrier" as its task is to carry the particles to the surface of the moulded or painted part, this carrier being chemically compatible with the thermoplastic polymer to be moulded or the powder coating material.

In practice the thermoplastic polymer and the coated particles, normally available in the form of chips, must be finely ground in order to favour complete mixing.

Although the mechanisms used to obtain a matt surface are substantially the same, for greater clarity, the explanation that follows deals the techniques of adding particles to a thermoplastic polymer to be moulded and to a powder coating paint separately.

When dealing with a thermoplastic polymer to be moulded, the coated particles are added to the thermoplastic polymer in order to obtain a powder mass to be loaded into the hopper on the extruder, where it is heated until it melts.

The carrier should have a melting point that is at least a few tens of degrees lower than the melting point of the thermoplastic polymer to be moulded, while the particles should preferably have a glass transition temperature that is at least equal to the melting point of the thermoplastic polymer to be moulded and must in any event not be damaged by the process temperature.

With the configuration described and the characteristics listed, during heating the carrier melts completely while the thermoplastic polymer to be moulded is still solid. In this situation the carrier is significantly fluid, as it is at a temperature a good deal higher than its melting point. Thus, due to the chemical compatibility between the carrier and the thermoplastic polymer to be moulded and the mixing effect generated by the extruder's screw, the carrier itself, and therefore the particles it carries, completely cover the powder granules of the thermoplastic polymer to be moulded, as these granules are still solid.

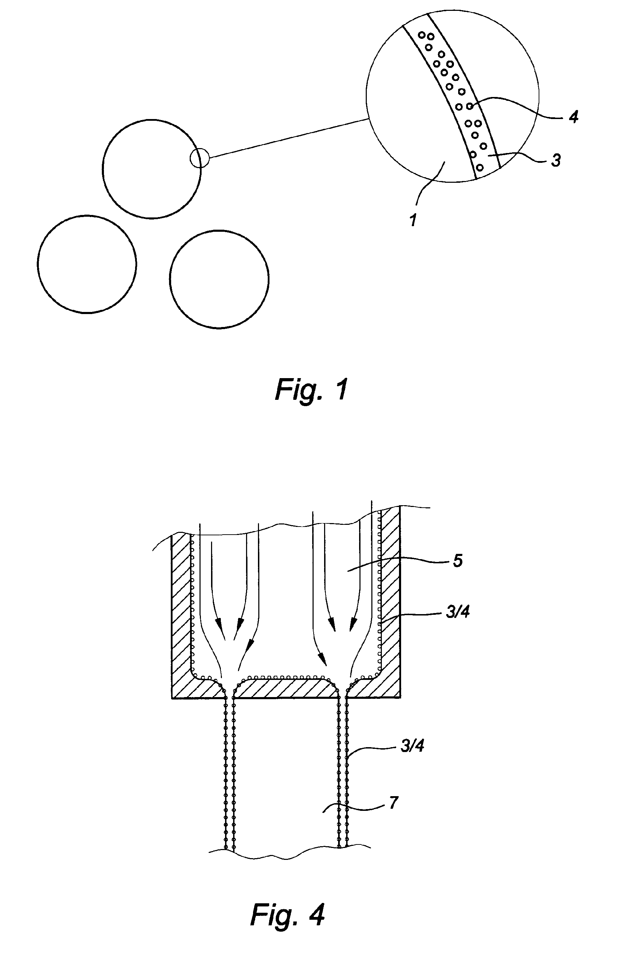

This situation is shown in fig. 1, in which (1) indicates the thermoplastic polymer granules coated with the carrier (3) in which the particles (4) are encapsulated.

As the temperature increases, the granules of thermoplastic polymer to be moulded begin to soften before melting. Under these conditions, while the thermoplastic polymer to be moulded is still very viscous, the carrier, being at a temperature well above its melting point, is very fluid and, when the granules of thermoplastic polymer to be moulded begin to coalesce, they form spherical granules of ever increasing size, the carrier tends to be pushed out of the contact zone and ends up spreading itself, along with the particles it is carrying, on the outer surface of the molten masses.

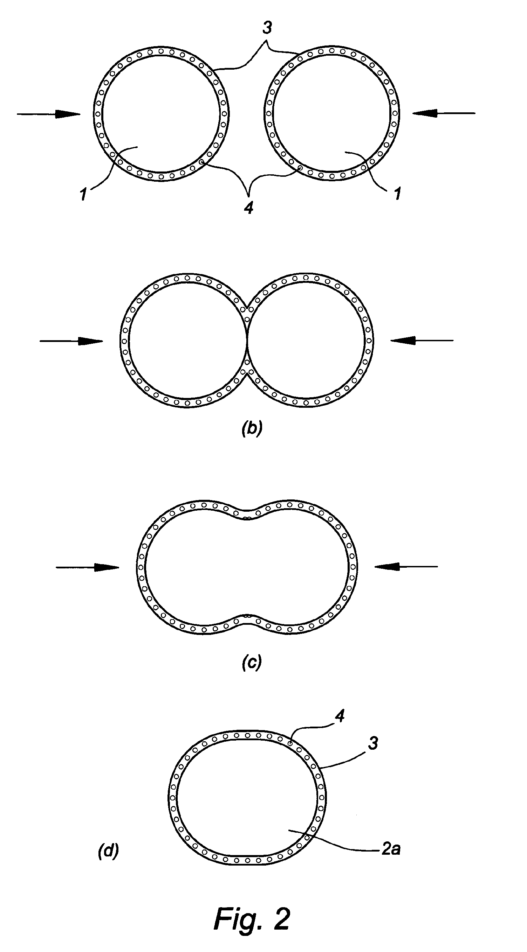

This stage is illustrated in figures 2 (a, b, c, d) in which two granules of thermoplastic polymer (2) are shown, coated with the carrier (3) encapsulating the particles (4), which move towards one another (fig. 2a), come into contact (fig. 2b) and finally, as the temperature continues to increase, begin combining (fig. 2c) to form a small single molten mass (20) (fig.2d).

The process described, that has started in the extruder, continues in the injection nozzle and the mould, with the result that the carrier and the encapsulated particles migrate almost completely towards the surface of the moulded part, while inside the moulded part only small traces remain of both the carrier, and the particles.

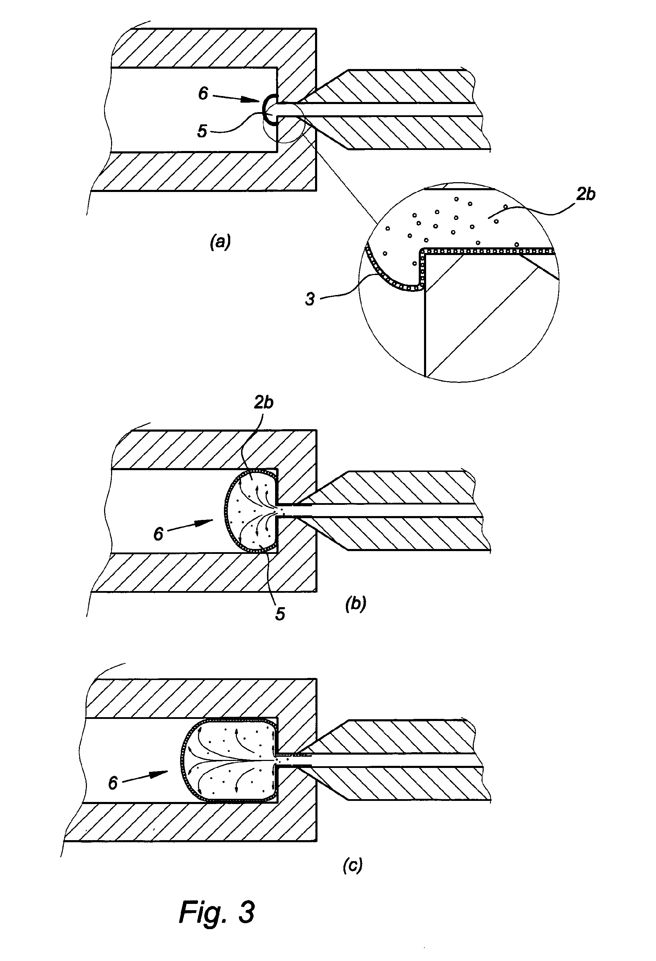

Figures 3 (a, b, c) show how the carrier and the encapsulated particles appear on the surface. In fig. 3a the molten mass (5) coming out of the extruder is still relatively rich in carrier with encapsulated particles, while the front (6) of this molten mass (5), moving towards the mould, is in its turn rich in carrier and particles.

As this front (6) moves forward in the mould, pushed on by new molten mass (5) injected by the extruder, the inclusions of carrier (3) and particles (4) follow the paths marked by the arrows and appear on the front surface (6), and, thus, deposit themselves in the inside walls of the mould.

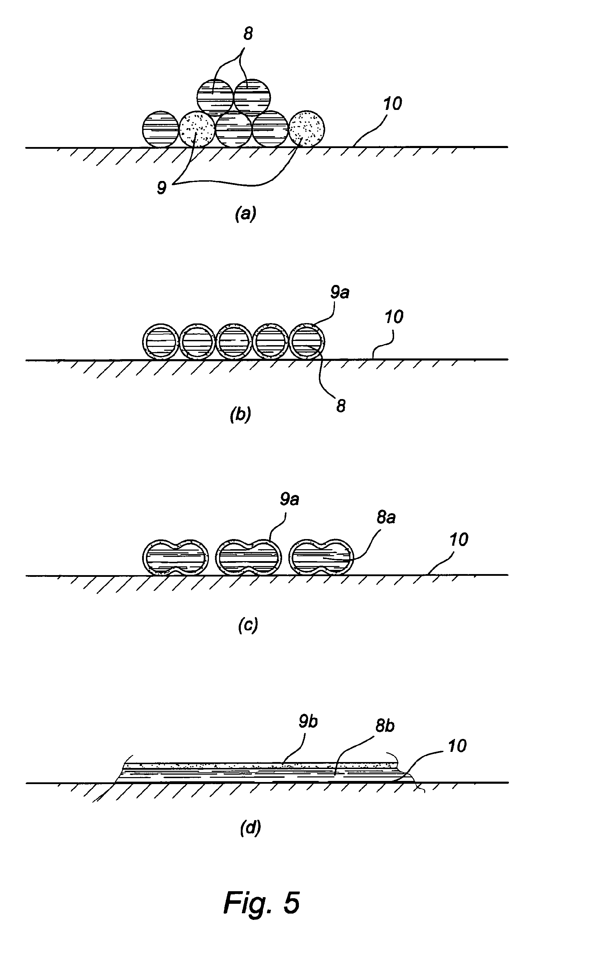

Obviously, when forming a parison, this stage of the process occurs before the extrusion die, thus, as shown in fig. 4, the carrier with the encapsulated particles is deposited on the outer and inner surfaces of the parison.

When extruding a mass in a paste state for calendering moulding, the carrier and the particles migrate towards the surface of the mass in exactly the same way as with the mechanism involved in screw mixing.

At this stage the importance of the carrier is clear. In fact, it is precisely the presence of a polymer with a melting point that is significantly lower than the melting point for the thermoplastic polymer to be moulded that makes the mobility of the particles possible. First of all they are separated through the carrier, since, as it melts, it acts as a lubricant allowing the particles to flow in relation to one another, and this is the condition that is required to separate the particles. But the carrier also mainly allows the particles to migrate, first towards the surface of the molten mass and then towards the surface of the parts moulded. It is clear in fact, as shown in figures 2 (a, b, c, d); that the particles that are between two granules of thermoplastic polymer that have just melted, would be encapsulated between them if there were no fluid means of transport, the carrier, to allow them to slip out of the molten mass as it increases in size, with the obvious result that a much higher quantity of particles would have to be added, without reaching the surface of the moulded part with the evenness and uniformity made possible by the presence of the carrier.

As far as additives for paint are concerned, a distinction must be made between powder coating paint materials and liquid paints.

In the case of liquid paints, the paint's own solvent dissolves the carrier and frees the particles that, having separated, are uniformly distributed in the fluid mass of the paint itself.

In the case of powder paints, the particles appear on the surfaces substantially in the same way as described for additives for thermoplastic polymers, as the powder granules that make up the paint are still basically solid at the temperature at which the carrier melts and, when these paint granules melt due to heat being added, they coalesce expelling the carrier and the particles it contains. The only difference is that this phenomenon takes place without mixing obtained using outside means. This is possible because the molecular weight of the paint before polymerisation is somewhat lower than the molecular weight of the thermoplastic polymer, so, once melted, the paint is much more fluid.

Fig. 5a shows solid granules of paint (8) and granules of carrier encapsulating the particles (9). Said granules (8) and (9) are deposited in a surface (10) to be painted. When heat is supplied, the carrier (9) melts before the paint and is therefore deposited on the granules (8) that are still solid in the paint itself, transporting the encapsulated particles and forming a coating (9a) made up of said particles (8) (fig. 5b). As more heat is supplied the granules (8) begin to melt and coalesce, forming larger masses (8a) on which the carrier and the encapsulated particles continue to form a coating (9a) (fig. 5c). Finally the paint will be completely molten forming a first layer (8b) on the surface (10), said first layer being covered by a second layer (9b) made up of the carrier and the encapsulated particles.

At this point polymerisation of the paint begins, which results in the layer (8b) solidification. As it cools further the layer (9b) also solidifies.

The particles and carrier are chosen on the basis of the thermoplastic polymer to be injection moulded, blow moulded, or calendered, or the powder paint.

There must always be sufficient chemical compatibility between the carrier and said thermoplastic polymer or the polymer that constitutes the base of the paint, otherwise good adhesion will not be obtained between said carrier and said moulding polymer or paint, the other characteristics must be chosen on the basis of the process parameters.

Obviously at the process temperature, neither the carrier, nor the particles must undergo any sort of alteration. In addition the glass transition temperature for the particles should preferably be equal or superior to the process temperature.

The particles to be used should preferably be microspheres made of polyurethane-polyurea as these have the greatest flatting and tactile characteristics for the same grain size and lightfastness.

Still among the organic compounds, these particles may be acrylic, cellulose, or polyamide particles. Inorganic particles may however be used as well, such as silica, mixed potassium and aluminium silicates, or talc particles.

As far as the carrier is concerned, its melting point must be at least a few tens of degrees lower than the process temperature, for example 50°C, so that the carrier will be very fluid at the process temperature, as this characteristic favours migration of the particles towards the surface of the molten mass.

The carrier can be chosen among polyethylene, polyethylene modified with 11 % ethylene vinyl acetate, polyethylene modified with 21% ethylene vinyl acetate, terpene phenolic resin, dioctyl phthalate, diisobutyl phthalate, diisonyl phthalate, diethyl adipate, dioctyl adipate, ethyl citrate, octyl palmitate, myristyl palmitate, cetyl stearyl palmitate, ethyl hexyl palmitate, purified castor oils, hydrogenated castor oils, olein, stearine, triglycerides, and these carriers may be made up of only one of these organic compounds or a mixture of the same.

In case of calendering moulding, a carrier can also be chosen where desirable that is fluid at room temperature. This moulding process is used mainly for plasticised PVC with liquid plasticisers. In this case some advantage can be drawn from using the plasticiser as the carrier thereby reducing the amount of plasticiser to be added to the polymer. Some plasticisers used in this case include: dioctyl phthalate, diisobutyl phthalate, diisonyl phthalate.

When using a liquid carrier therefore, the coated particles are in the form of a more or less fluid paste, suitable to be added to the polymer by means of appropriate pumps.

As far as the particles are concerned, in-depth test has been carried out that makes it possible to provide more detailed indications as to the effects that can be obtained by suitable selection of these.

The test was carried out using polyurethane-polyurea microspheres known commercially as Decosphaera. A relationship was found between the diameter and the aesthetic effect produced. It was particularly noted that maximum flatting, and maximum soft touch are obtained by using smaller diameter spheres. Tab. 1 summarises the results obtained when conducting experiments with transparent micro spheres of various diameters.

When coloured microspheres are used, interesting chromatic effects can also be obtained. Specifically, by mixing microspheres of various colours, surfaces can be obtained that are not the same as one would expect when mixing the colours of the particles, as these colours remain separate. In other words the colours are not combined. Tab. 2 summarises the results obtained when conducting experiments with coloured microspheres of various diameters.

As far as the coated particles are concerned, experiments were carried out on some formulations containing Decosphaera type microspheres covered with carriers chosen among the types indicated. The formulations tested and the results obtained are shown in tab. 3.

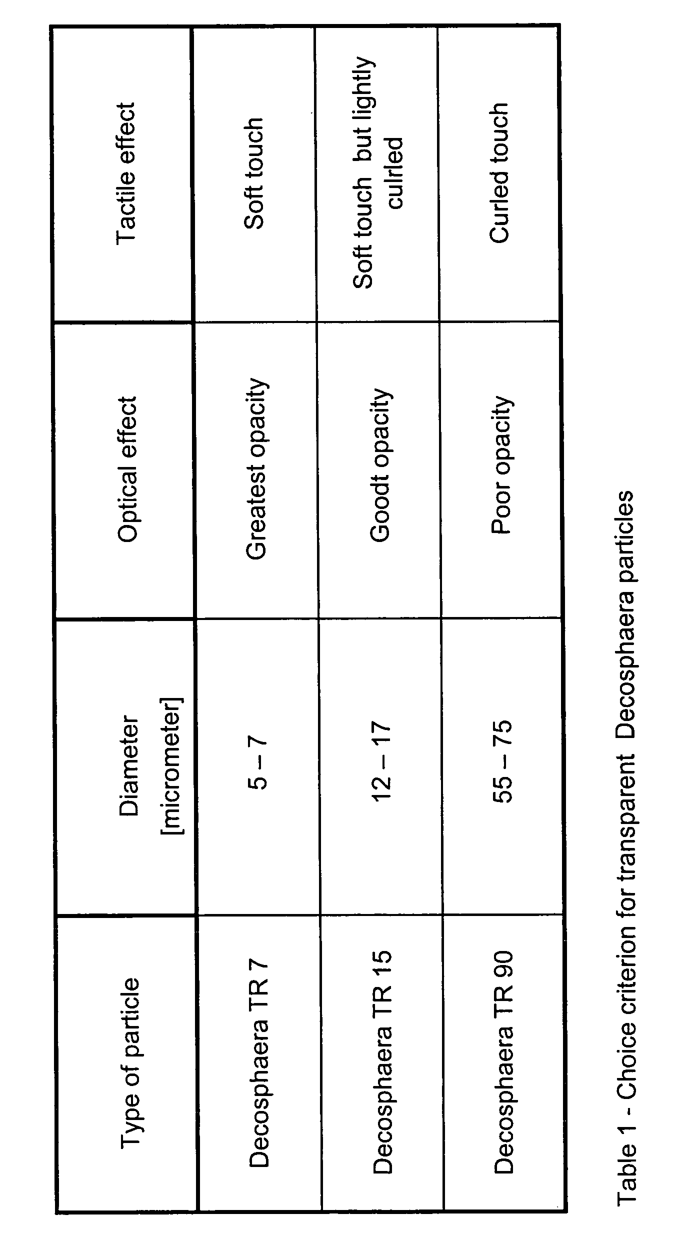

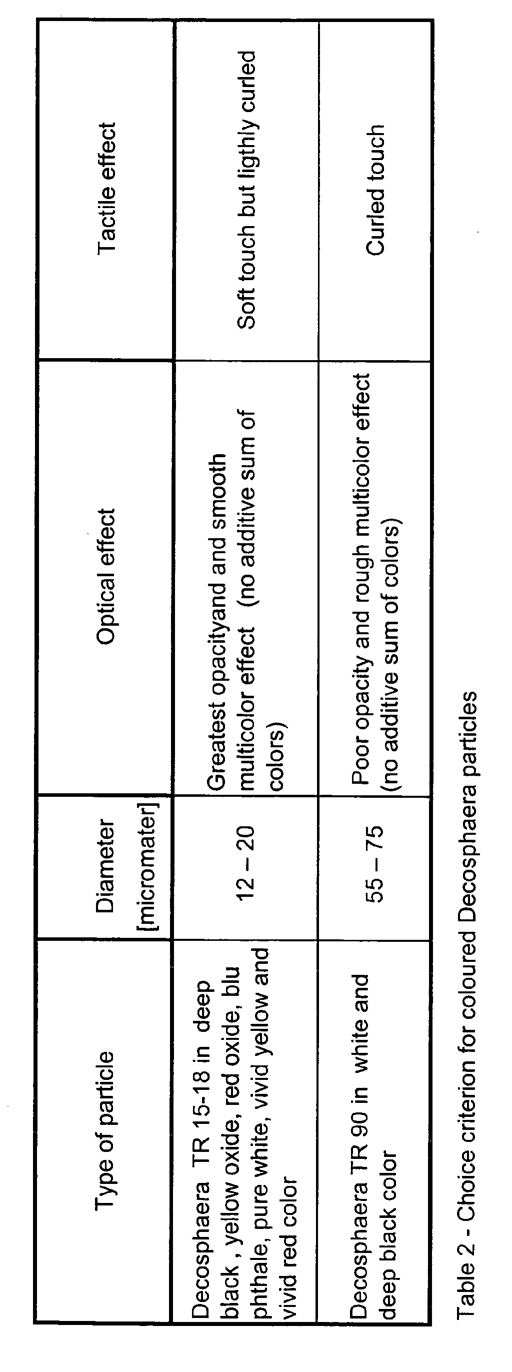

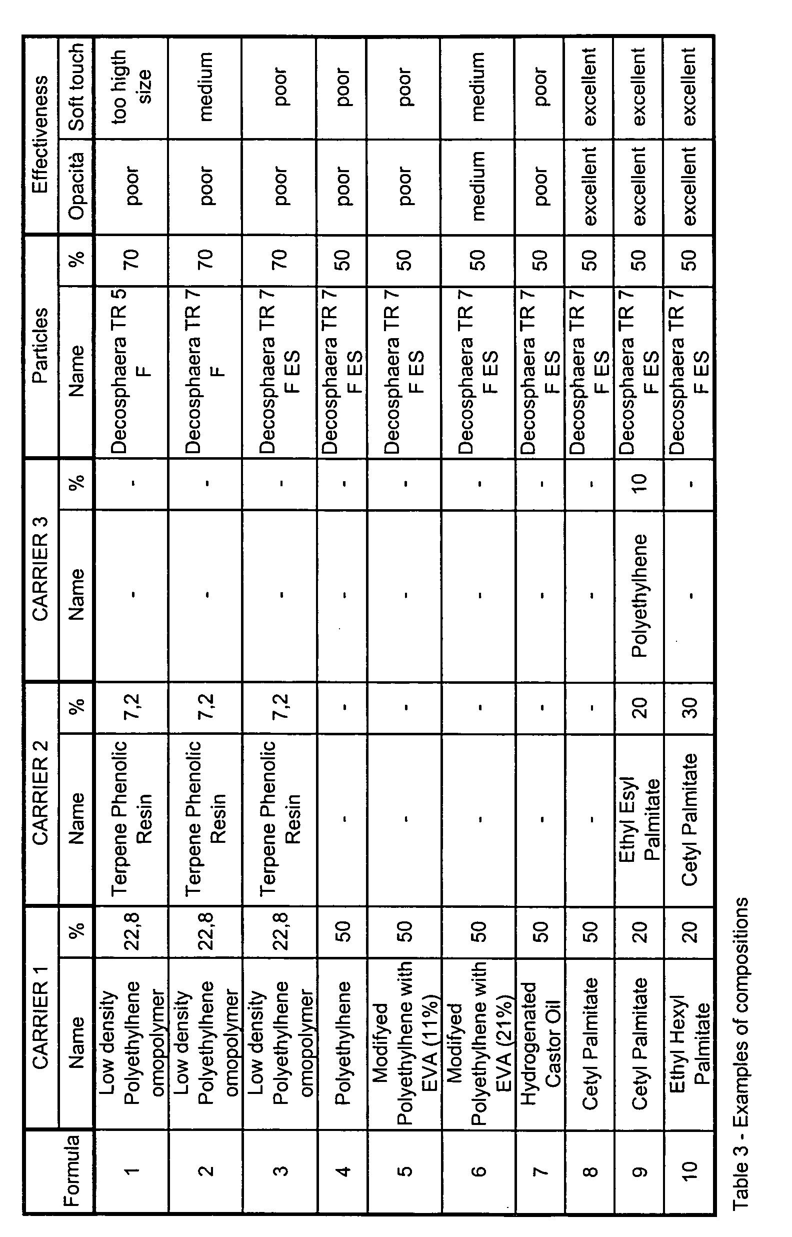

## Claims

1. Method for flatting moulded thermoplastic polymers parts and powder paints, of the type that requires particles to be added to said thermoplastic polymers and paints, **characterised by** the fact that said particles to be added to the thermoplastic polymers and paints are coated with a carrier that has a melting point that is lower than the melting point for said thermoplastic polymers and paints.

2. Method according to claim 1, **characterised by** the fact that said particles are made of material able to withstand the moulding temperature used for said thermoplastic polymers.

3. Method according to claims 1 and 2, **characterised by** the fact that said particles have a glass transition temperature that is at least equal to the moulding temperature of said thermoplastic polymers.

4. Method according to claim 1, **characterised by** the fact that said particles are made of material able to withstand the polymerisation temperature of said paints.

5. Method according to claims 1 and 4, **characterised by** the fact that said particles have a glass transition temperature that is at least equal to the polymerisation temperature of said paints.

6. Method according to claims 1 to 5, **characterised by** the fact that the particle sizes are between 5 and 75 microns.

7. Method according to claims 1 to 6, **characterised by** the fact that said particles are polyurethane-polyurea microspheres.

8. Method according to claims 1 to 6, **characterised by** the fact that said particles are acrylic, cellulose, polyamide, or urea organic particles.

9. Method according to claims 1 to 6, **characterised by** the fact that said particles are, silica, mixed potassium and aluminium silicate, or talc inorganic particles.

10. Method according to claim 1, **characterised by** the fact that said carrier is chemically compatible with said thermoplastic polymers to be moulded.

11. Method according to claim 1, **characterised by** the fact that said carrier is chemically compatible with said paints.

12. Method according to claim 1, **characterised by** the fact that said carrier is an organic compound chosen from: polyethylene, polyethylene modified with 11 % ethylene vinyl acetate, polyethylene modified with 21 % ethylene vinyl acetate, terpene phenolic resin, dioctyl phthalate, diisobutyl phthalate, diisonyl phthalate, diethyl adipate, dioctyl adipate, ethyl citrate, octyl palmitate, myristyl palmitate, cetyl stearyl palmitate, ethyl hexyl palmitate, purified castor oils, hydrogenated castor oils, olein, stearine, triglycerides, and these carriers may be made up of only one of these organic compounds or a mixture of the same.

13. Moulded polymer part or painted part with a matt surface, **characterised by** the fact that said surface contains particles encapsulated by a carrier.

14. Part according to claim 13, **characterised by** the fact that the particle sizes are between 5 and 75 microns.

15. Part according to claim 13, **characterised by** the fact that said particles are polyurethane-polyurea microspheres.

16. Part according to claim 13, **characterised by** the fact that said particles are acrylic, cellulose, polyamide, or urea organic particles.

17. Part according to claim 13, **characterised by** the fact that said particles are silica, mixed potassium and aluminium silicate, or talc inorganic particles.

18. Part according to claim 13, **characterised by** the fact that said carrier is chemically compatible with said thermoplastic polymers to be moulded.

19. Part according to claim 13, **characterised by** the fact that said carrier is chemically compatible with said paints.

20. Part according to claim 13, **characterised by** the fact that said carrier is an organic compound chosen from: polyethylene, polyethylene modified with 11 % ethylene vinyl acetate, polyethylene modified with 21 % ethylene vinyl acetate, terpene phenolic resin, dioctyl phthalate, diisobutyl phthalate, diisonyl phthalate, diethyl adipate, dioctyl adipate, ethyl citrate, octyl palmitate, myristyl palmitate, cetyl stearyl palmitate, ethyl hexyl palmitate, purified castor oils, hydrogenated castor oils, olein, stearine, triglycerides, and these carriers may be made up of only one of these organic compounds or a mixture of the same.
